(19) **Europäisches Patentamt / European Patent Office / Office européen des brevets**

(11) **EP 1 288 850 B1**

(12) **EUROPEAN PATENT SPECIFICATION**

(45) Date of publication and mention
of the grant of the patent:
**25.04.2007 Bulletin 2007/17**

(51) Int Cl.:
**G06K 15/00** (2006.01)     **G06F 3/12** (2006.01)

(21) Application number: **02078472.4**

(22) Date of filing: **21.08.2002**

(54) **Step and repeat printing of pattern data**

Schrittweises Drucken eines Druckbildes

Imprimer pas à pas des données d'image

(84) Designated Contracting States:
**DE GB IT**

(30) Priority: **31.08.2001 EP 01120938**

(43) Date of publication of application:
**05.03.2003 Bulletin 2003/10**

(73) Proprietor: **Hewlett-Packard Company
Palo Alto, CA 94304 (US)**

(72) Inventors:
• **González Jordi
08192 Sant Quirze del Valles.,
Barcelona (ES)**
• **Alfaro Victor
08190 Sant Cugat del Valles.,
Barcelona (ES)**
• **Lammens Johan
08190 Sant Cugat del Valles,
Barcelona (ES)**

(74) Representative: **Yennadhiou, Peter et al
Hewlett Packard Espanola, S.A.,
Barcelona Division,
Avda. Graells, 501
08190 Sant Cugat del Vallès (B) (ES)**

(56) References cited:
**EP-A- 0 571 926**     **US-A- 5 450 533**
**US-A- 6 121 975**     **US-A- 6 147 688**

EP 1 288 850 B1

## Description

### Field of the Invention

The present invention relates to the field of printers.

### Background to the Invention

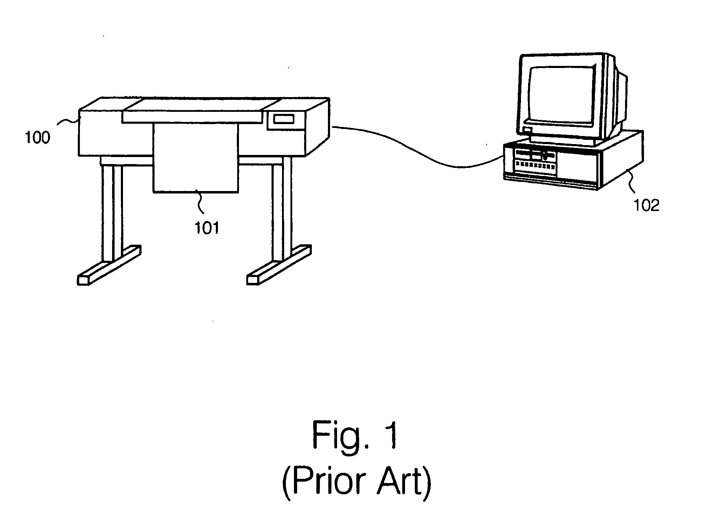

Conventional large format printer devices are capable of printing images to textile print media. Fig. 1 herein illustrates schematically in perspective view, such a printer 100, having a printer mechanism comprising a print head which traverses from side to side across a print medium 101, as the print medium is spooled past the print head. The printer may receive print files from a computer 102 operating a computer aided design (CAD) application.

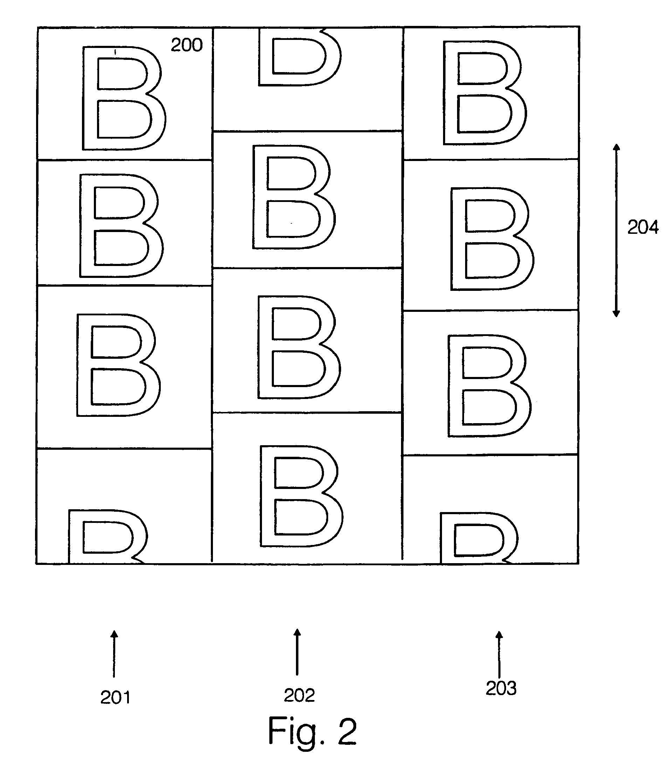

For printing of textile medium, a printed output typically consists of a small design which is repeated across the fabric in both vertical and horizontal dimensions as illustrated in Fig. 2 herein. A design 200 is repeated in a tiled manner in a plurality of columns 201-203, wherein for each column, the design is repeated, and is shifted in a vertical direction by a vertical distance of a percentage of the design height 204. In the example if Fig. 2, the vertical shift between columns is of the order of 27% of pattern height 204. In general, outputs for printing onto textile print media may comprise a small design which can be shifted on pattern repeat either in the vertical or horizontal dimension by a percentage of the pattern size.

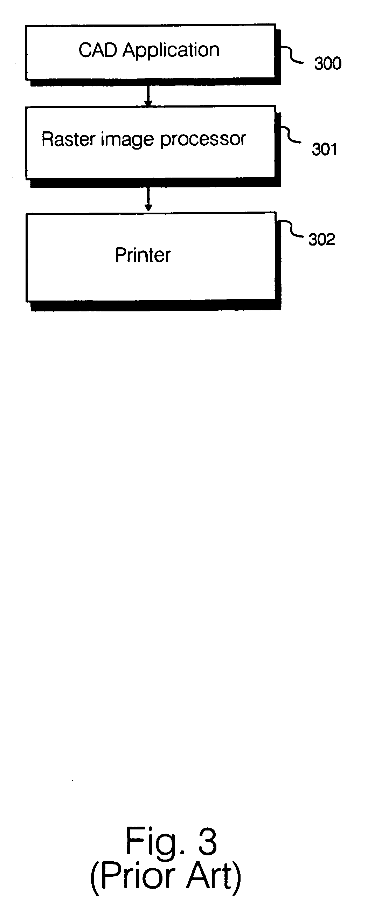

Referring to Fig. 3 herein, a conventional imaging pipeline deployed in a conventional printer device and computer as shown in Fig. 1 to print textile designs consists of a computer aided design (CAD) application 300 for creating a design to be printed onto a textile; a raster image processor (RIP) 301 for converting an image data output from the CAD application to a raster print format, and a printer mechanism 302 which prints the image onto the textile print medium.

Conventionally the CAD application deals with a single repeated image. Therefore there arises the issue of where a step and repeat is applied within the printing system, to generate a tiled pattern. In order to minimize file size transferred between the CAD application and the raster image processor, conventional applications either send a single design to the raster image processor, and the raster image processor adds a step and repeat, or the application builds a minimum repeat into the design, which includes a step.

The raster image processor then performs the rest of the processing and sends a larger raster file to the printer at a resolution suitable for the printer to print, which covers the whole printing area of the print medium to be printed, and includes multiple repeats of the design.

However, when considering printing of offset tiled step and repeat patterns over large areas on large fabrics of many meters, the conventional work flow methods as described above have several problems as follows:

Firstly, the amount of data processing required for raster image processing is huge. There is a problem that raster image processor throughput may not keep up with a fast printer, unless a very fast and expensive printer hardware is used. Some raster image processors may only process a minimum repeat pattern, and store the minimum repeat pattern on to their local disk, and then spool a whole page of full rastered data from the disk, adding repeats on the fly to cover the whole of the print medium area.

Secondly, data needs to be sent across an input/output channel to the printer device. In the case of a fast printer the input/output device, or a raster image processor, may not keep up with the throughput of image data. This may not only make the printing slow, but might also lead to reduction in print quality.

Thirdly, with fast printers, the raster image processor may not support printing simultaneously to a cluster of printers due to the processing and input/output limitations, unless a very expensive raster image processor hardware, or multiple raster image processors are used. This would result in an increased cost of an expensive high perfrmance raster image processor, or multiple raster image processors where simultaneous printing to a cluster of printers is required.

EP 0571926 disclose an image forming system and apparatus, comprising a printer device aimed at properly reproducing selected colors and solving prior art problems of how to designate a particular color by color ranges.

This document further discloses a method of operating a printer device for printing an image comprising a plurality of basic images. The basic pattern data is received from the host computer. The printer of also receives a step factor, and prints the basic image a plurality of times on a print medium, wherein each printed basic image is separated from an adjacent printed basic image by a distance specified by the step factor.

US 5,450,533 discloses a method and apparatus for printing a pattern, and tiling that pattern across a web of print media, by joining basic figurs with the object of overcoming discontinuities at boundaries between the tiled patterns.

### Summary of the Invention

Specific implementations according to the present invention aim to provide an improved work flow for a printer device for printing an offset repeat-tiled image, which takes advantage of the repetition within the printed image by determining from a received image data file a minimum pattern. In one embodiment a raster image processor may send a minimum repeat, which includes a step factor, and a printer device replicates the minimum repeat as many times as is needed to cover a printing area.

In an alternative embodiment, a raster image processor sends a simple repeat pattern and a step factor, and a printing device steps and repeats the pattern.

A method of processing image data in a printer system is provided, said printer system comprising a raster image processor and a printer device, said printer device comprising an input/output device, said method comprising:

> receiving an image date file (600);
>
> determining (801) from said image data file a minimum pattern which cannot be constructed by replication of a smaller self contained repeatable unit;
>
> determining (802) from said image file a step factor, said step factor representing a translation displacement of said minimum pattern, in order to produce repeats of the pattern across a print medium, said step factor being determined as a two dimensional displacement comprising at least first and second Cartesian co-ordinates;
>
> raster image processing said minimum pattern (601) to produce a raster imaged processed minimum pattern data;
>
> sending (803) from said raster image processor, said raster image processed minimum pattern data to a printer device (602);
>
> sending said step factor from said raster image processor to said printer device;
>
> receiving said step factor and said raster image processed minimum pattern at said input/ output device of said printer device; and
>
> applying at said printer device a plurality of repeat printings of said raster image processed minimum pattern (1102, 1203) at spatial intervals determined by said step factor.

Other aspects of the present invention are as recited in the claims herein, and the scope of the invention shall be limited only by the features of the claims herein.

## Brief Description of the Drawings

For a better understanding of the invention and to show how the same may be carried into effect, there will now be described by way of example only, specific embodiments, methods and processes according to the present invention with reference to the accompanying drawings in which:

> Fig. 1 shows in perspective view a known large format printer device, and computer, wherein the computer runs a computer aided design application for driving the printer;

Fig 2 illustrates schematically a typical print pattern for printing to a textile medium, having a tiled offset design;

Fig. 3 illustrates schematically a conventional imaging pipeline of the print system of Fig. 1 herein,

Fig. 4 illustrates schematically a printing system comprising a cluster of printers, according to a specific implementation of the present invention for printing a sheet of printer material with an image comprising a tiled stepped and repeated design;

Fig. 5 illustrates schematically components of a printer device and computer entity of the printing system of Fig. 4;

Fig. 6 illustrates schematically components of a second implementation of the printing system of Fig. 4, showing a host computer entity connecting to a printer device via a stand alone rater image processor.

Fig. 7 illustrates schematically a work flow process of printing an image onto a print medium using the print system of Figs. 4 or 6;

Fig. 8 illustrates schematically one example of a pattern printed onto a print medium;

Fig. 9 illustrates schematically process steps carried out by a raster image processor according to first mode of operation of the present invention;

Fig. 10 illustrates schematically one example of a minimum pattern stepped and repeated;

Fig. 11 illustrates schematically a step factor of the stepped and repeated patterns of Fig. 10

Fig. 12 illustrates schematically a logical work flow through a printer device according to a specific implementation of the present invention;

Fig. 13 illustrates schematically operation of a raster image processor according to second mode of operation of the present invention, for stepping and repeating a repeat pattern;

Fig. 14 illustrates schematically a repeat pattern, stepped and repeated; and

Fig. 15 illustrates schematically a step factor of the repeat pattern of Fig. 14.

## Detailed Description of the Best Mode for Carrying Out the Invention

There will now be described by way of example the best mode contemplated by the inventors for carrying out the invention. In the following description numerous specific details are set forth in order to provide a thorough understanding of the present invention. It will be apparent however, to one skilled in the art, that the present invention may be practiced without limitation to these specific details. In other instances, well known methods and structures have not been described in detail so as not to unnecessarily obscure the present invention.

Specific implementations according to the present invention aim to provide an improved work flow for a printer device for printing an offset repeat-tiled image, which takes advantage of the repetition within the printed image. In one embodiment a raster image processor may send a minimum repeat, which includes a step factor, and a printer device replicates the minimum repeat as many times as is needed to cover a printing area.

In an alternative embodiment, a raster image processor sends a simple repeat pattern and a step factor, and a printer device steps and repeats the pattern.

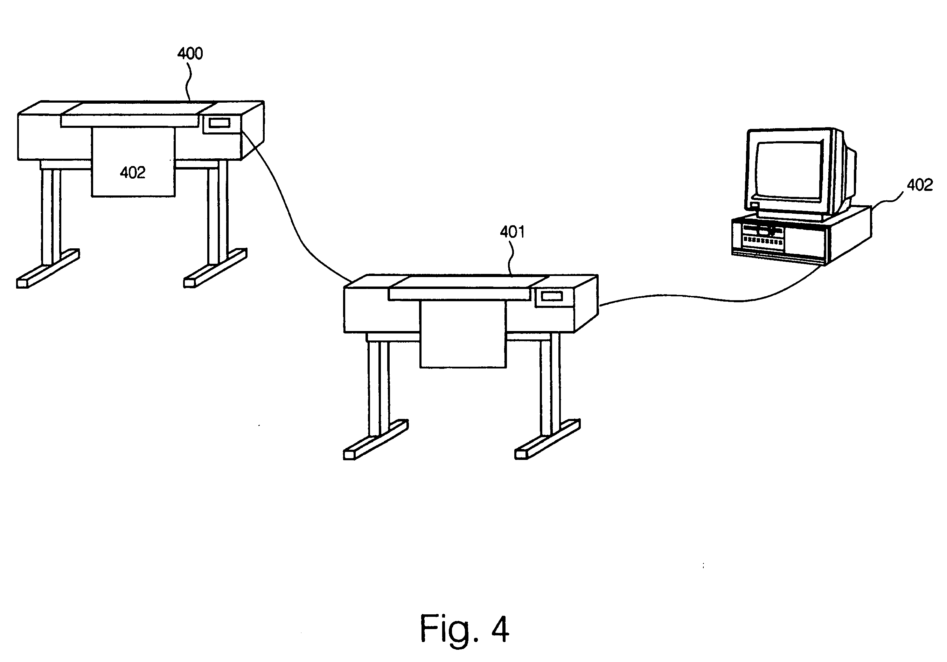

Referring to Fig. 4 herein, there is illustrated schematically components of a printing system adapted for printing a tiled stepped and repeated design image, suitable for printing to textile print materials. The print system comprises one or a plurality of printer devices 400, 401, and a computer device 402. The computer device comprises a computer aided design (CAD) application. The CAD application sends an image file to each of the printers 400, 401, which apply the design in a tiled, stepped and repeated pattern across a whole length and width Oof a textile medium to be printed.

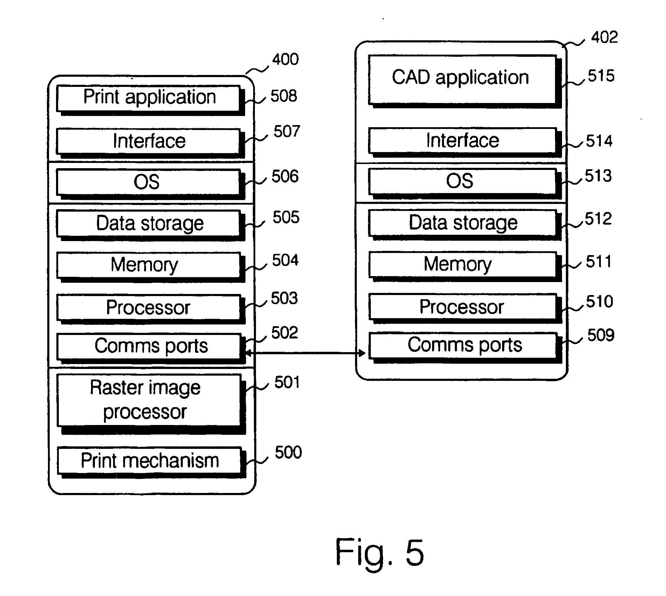

Referring to Fig. 5 herein, there is illustrated schematically components of the print system of Fig. 4. Each printer device 400 comprises a printer mechanism 500 having a print head containing a plurality of colored inks, which traverses left to right across a print medium in a direction transverse to a direction of motion of the print medium 402 through the printer device; a raster image processor 501 for converting an image data file into a raster image processed data file; a communications port 502 for communicating across a local area network or the like with a computer 402 and one or more other printer devices; a data processor 503; a volatile memory device 504; a data storage device 505, for example a hard disk data storage device; a local operating system 506 for controlling the printer device; an interface 507, for example a web administration interface, or a liquid crystal display (LCD) interface with keypad; and one or more print applications 508.

The computer device 402 comprises a communications port 509; a data processor 510; a non volatile memory 511; a data storage device 512, for example a hard disk drive; an operating system 513, for example the known Windows®, Linux® or like operating system;

a user interface 514 including video monitor, keyboard, and pointing device; and a computer aided design application 515.

Whilst in Fig. 5 herein, the raster image processor 501 is shown as being part of a printer device, the raster image processor need not be in-built into a printer device, but may reside physically in a separate computing entity.

The raster printer device receives raster image processed data from the raster image processor via an input/output device. The raster image processor may have its own discrete data processing capability, and communicates with the printer device via a communications link and via an input/output device at the raster image processor. Because the bit rate capacity of the communications link between the raster image processor and the printer device is limited, and the bit rate capacity of each of the input output devices of the printer device and the raster image processor respectively are limited, there is an advantage in applying a step and repeat function at the printer device, rather than sending large amounts of image data generated by the raster image processor, through the input/output devices where that image data includes a repeated pattern.

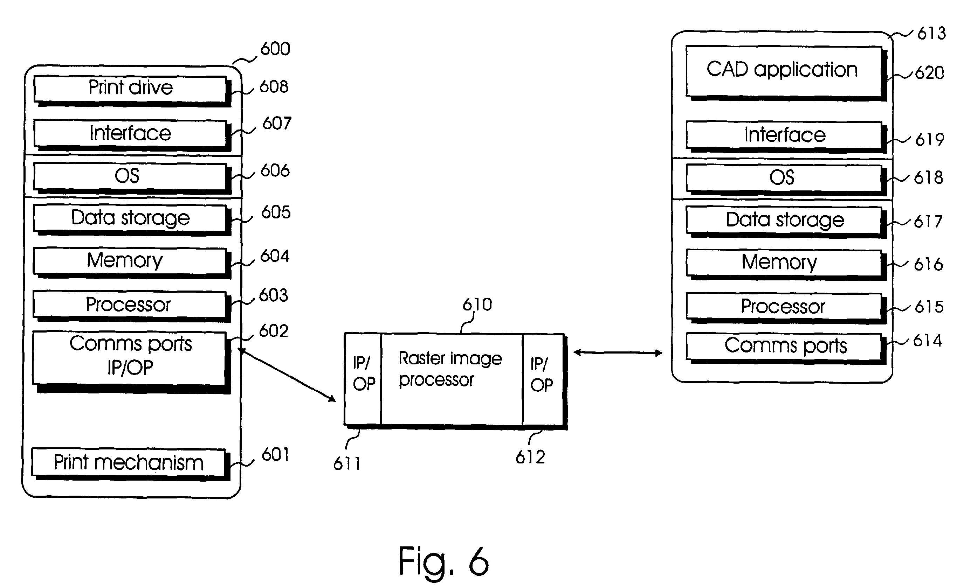

Referring to Fig. 6 herein, there is illustrated schematically a further implementation of the print system. A printer device 600 comprises a printer mechanism 601 having a printer containing a plurality of coloured inks, which traverses across a print medium; a communications port 602, comprising an input/output device at the printer; a data processor 603; a volatile memory device 604; a data storage device 605 for example hard disk data storage device; a local operating system 606 for controlling the printing device; an interface 607, for example a web administration interface or a liquid crystal display (LCD) interface with key pads; and one or more print drivers 608.

Raster image processor 609 has first and second input/output devices 610, 611 respectively, for communicating with the printer device, and host computer 612. First input/output 611 communicates with the printer, and second input/output port 612 communicates with a communications port 614 of the host computer, for receiving image date.

The host computer 613 comprises the communications port 614; at least one data processor 615; a memory device 616; data storage device 617; for example hard disk data storage device; an operating system 619, for example a known Microsoft Windows® or Linux® or Unix® operating system; a known interface 618, for example a video display device, keyboard and mouse; and one or more image generating applications 620, for example a computer aided design (CAD) application.

The CAD application 620 generate a print application which is sent via the communication port 614 of the host computer to the raster image processor 610 to be rasterised. The raster image processor abstracts a minimum repeat pattern, plus a step and repeat factor, and sends the minimum pattern and step and repeat factor over the communications link between the printer device and the raster image processor via the input/output port 611 and communications port 602 on the printer device. Step and repeat of the minimum repeat pattern is applied at the printer device to produce a continuous printed image comprising the rasterised minimum repeat pattern, repeated at an interval specified by the step and repeat function.

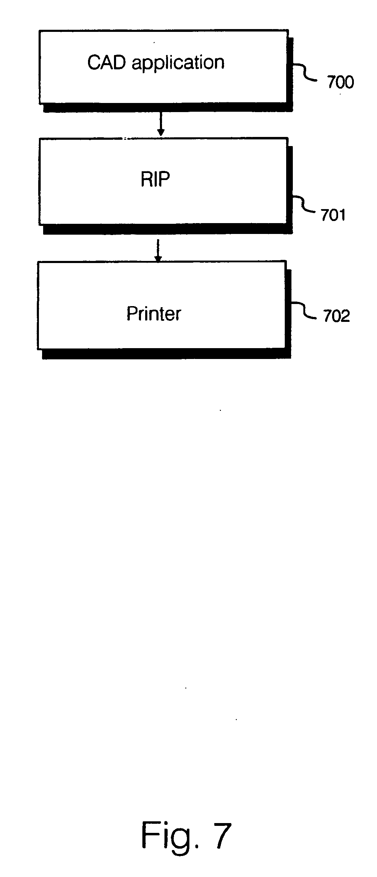

Referring to Fig. 7 herein, there is illustrated schematically components in a work flow process for printing a tiled, stepped and repeated print image onto a print medium according to the best mode. The process includes generation of an image pattern by CAD application 700, the patterned image being sent to a raster image processor 701. The raster image processor, instead of sending a whole printing area to a printer 702 needs to only send either:

 1. a minimum repeat pattern, which includes a step factor, or

 2. a simple repeat pattern and step factor.

In process 702, the printer, in the case of a minimum repeat including a step factor replicates the repeat as many times as needed to cover a printing area, or in the case of receiving a simple repeat pattern with step factor, steps and repeats the pattern to cover the whole of an area of the print medium.

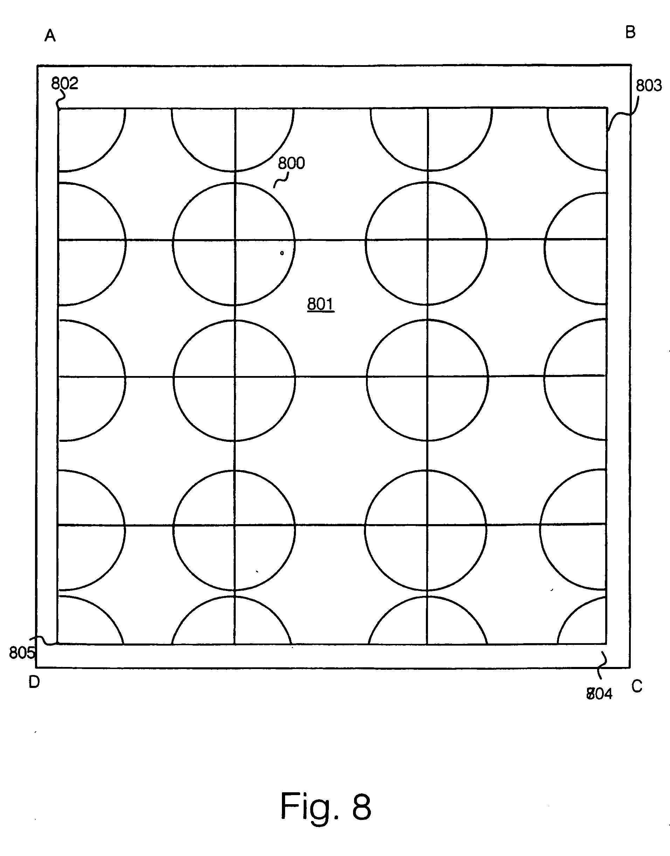

Referring to Fig. 8 herein, there is illustrated a pattern printed onto a textile medium.

In this specification, the following terms have the following meanings:

 "Design" means a unit of image which is self contained and repeatable.
 An example of a design is the circle 800 in Fig. 8.

 "Pattern" means a unit of image containing one or more designs including part completed designs, arranged in two dimensions. In a pattern, a plurality of designs may be arranged in stepped and repeated manner, and rotated with respect to each other. In Fig. 8, a pattern may substantially cover a whole print area, for example the pattern defined between points 802-805.

 A "minimum pattern" means a minimum unit of pattern which is self contained and repeatable, and which cannot be constructed by replication of a smaller self contained repeatable unit. An example of a minimum pattern is the pattern 801 in Fig. 8.

 "Print area" means an area of a print medium to be printed with at least one pattern. In Fig. 8, the print area is defined as the area A, B, C, D.

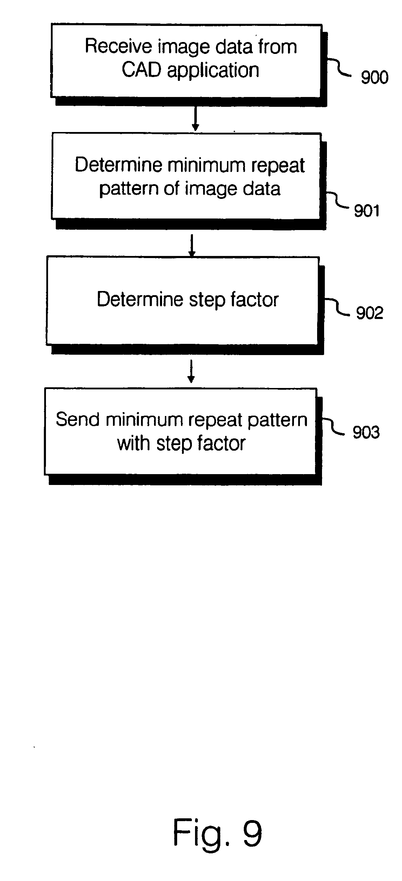

Referring to Fig. 9 herein, there is illustrated schematically process steps carried out by the raster image processor, according to a first mode of operation. In step 900 the raster image processor receives an image data from the CAD application. In step 901 the RIP determines a minimum repeat pattern of the image data. This is the minimum unit of image, which can be stepped and repeated in tiled manner across a print medium. In step 902, a step factor is determined. The step factor represents a translational displacement of the minimum repeat pattern, in order to produce repeats of the pattern across a print medium. The step factor can be determined as a two dimensional X, Y, R coordinate displacement of the pattern data from a starting position, where X and Y are Cartesian co-ordinates and R is a rotational factor. In step 903, the raster image processor sends the minimum repeat pattern and the step factor to the printer mechanism.

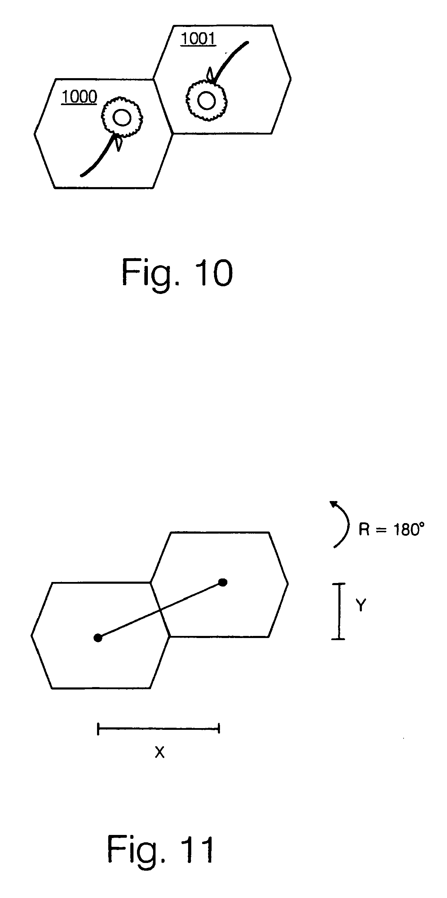

Referring to Fig. 10 there is illustrated schematically one example of a minimum pattern 1000, stepped and repeated once as part of a larger step and repeat by the printer mechanism. In this case, the minimum repeat pattern has an hexagonal boundary, and the step and repeat includes a rotation of 180° about a central point of the pattern.

Referring to Fig. 11 herein, the step factor of the pattern of Fig. 10 is illustrated. The step factor comprises an X translation in a horizontal direction, a Y translation in a vertical direction, and a rotational translation, in this case of 180° about a central point of the pattern.

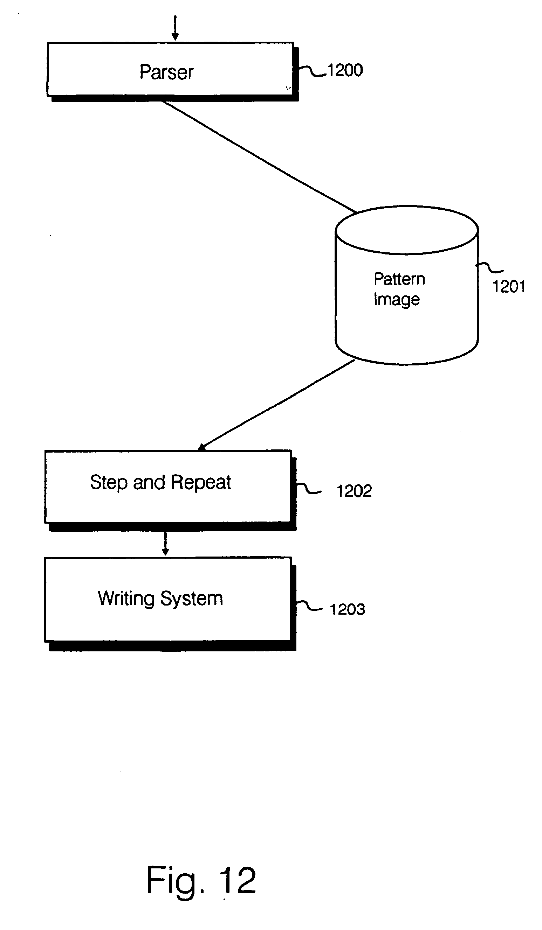

Referring to Fig. 12 herein, there is illustrated schematically a logical work flow through a printer device 400 on receiving an image file from the CAD application of computer 402. In process 1200, a parser parses the image data file received from the CAD application, via the network. In process 1201, the image file is stored on the local data storage device of the printer device, until a complete repeatable pattern data is accumulated. In process 1202, the printer steps and repeats the pattern image, which is sent to a writing system in process 1203 for writing via the print mechanism 500 of the printer to the print medium.

The work flow processes shown in Fig. 12 may be carried out simultaneously by a plurality of printer devices, each receiving a raster image processed image file from a single raster image processor. Therefore, several printer devices can operate in parallel to print a same pattern over a plurality of print media in parallel.

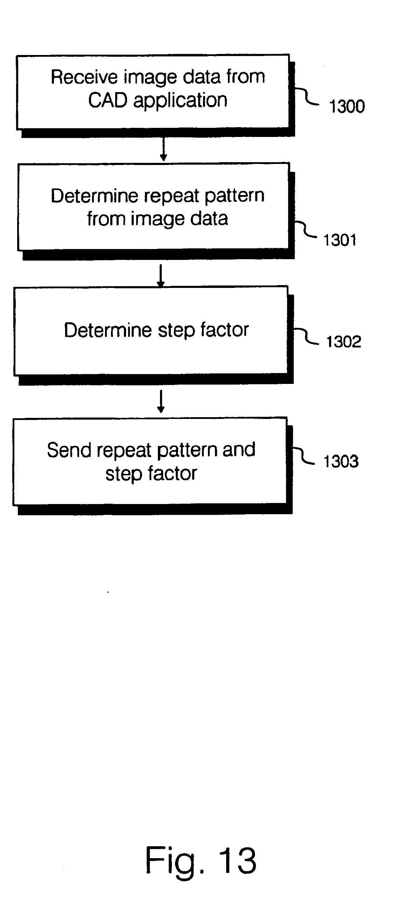

Referring to Fig 13, according to a second mode of operation of the raster image processor, a repeat pattern is sent with a step factor. In step 1300, the raster image processor receives an image data from the CAD application. In step 1301, the raster image processor determines a repeat pattern from the image data. The repeat pattern is not necessarily a minimum repeat pattern, but may be a section of image to be repeated. In step 1302, the raster image processor determines a step factor for stepping the repeat pattern and in step 1303 sends the repeat pattern data and step factor data to one or more printer mechanism of one or more printers.

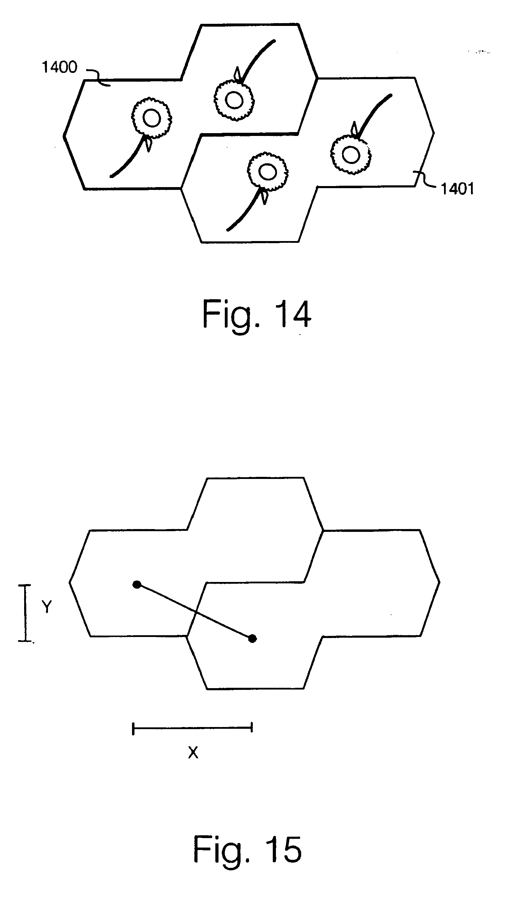

Referring to Fig. 14 herein, there is illustrated schematically a repeat pattern 1400 which has been duplicated once to produce duplicate repeat pattern 1301. The repeat pattern comprises a repeated design within the repeat pattern.

Referring to Fig. 15there is illustrated schematically a step function for stepping the repeat pattern of Fig. 15. The step function comprises an X, Y two dimensional translation in Cartesian co-ordinates.

In either of the above two modes of operation, a benefit of the specific methods according to the present invention may be illustrated by the following example. If a print area of dimension N x M is to be repeated, with a pattern area of dimension P x Q with a step factor of 50% the output file produced by the raster image processor would be reduced in terms of bytes of data by:

In the case of the first mode of operation:

$$(N \times M)/(P \times 2 \times Q \times 2)$$

and in the case of the second mode of operation by:

$$(N \times M)/(P \times Q)$$

For example, for a print area where N = 60cm, and M = 900cm, and a pattern size where P = Q = 5cm, the amount of data passing through the input/output interface of the printer would be reduced in the case of the first mode of operation by 540 times, and in the case of the second mode of operation by 2160 times.

Since the raster image processor and the input/output of the printer device only need to process a small portion of an image to be printed, the raster image processor and the input/output device of the printer no longer limit the rate of printing of an image, and the printer mechanism can be run at full utilization, with the rate of image printing determined by the maximum rate of operation of the printer mechanism itself.

A further advantage of the above implementations is that since the raster image processor and the input/output device of the printer are running at below maximum utilization, the same raster image processor can be used to send to several printers simultaneously in a cluster of printers formed around a single raster image processor.

In both modes of operation, an image format sent to the printer can be either in contone, for example 32 bits Cyan, Magenta, Yellow, K or in half toned format at a low level device format. In the case of sending an image in contone format, repeating of the image may be done before half toning. This results in a smooth transition of image from repeat to repeat.

In general, processing in the raster image processor is reduced compared to prior art systems, and as is data traffic and the input/output device of a printer for textile materials, by taking advantage of a repeat nature of patterns to be printed on textile materials.

Because the input/output device of a printer and the capacity of the raster image processor is released, the same raster image processor and input/output can be used to print on several printer devices arranged in a cluster. Alternatively, a much cheaper and lower performance raster image processor and input/output hardware can be used in a printer device, leading to a reduced cost printer device having a same printing capacity as a conventional printer device.

## Claims

1. A method of processing image data in a printer system, said printer system comprising a raster image processor and a printer device, said printer device comprising an input/ output device, said method comprising:

   receiving an image data file (600);
   determining (801) from said image data file a minimum pattern which cannot be constructed by replication of a smaller self contained repeatable unit;
   determining (802) from said image file a step factor, said step factor representing a translation displacement of said minimum pattern, in order to produce repeats of the pattern across a print medium, said step factor being determined as a two dimensional displacement comprising at least first and second Cartesian co-ordinates;
   raster image processing said minimum pattern (601) to produce a raster image processed minimum pattern;
   sending (803) from said raster image processor, said raster image processed minimum pattern to a printer device (602);
   sending said step factor from said raster image processor to said printer device;
   receiving said step factor and said raster image processed minimum pattern at said input/ output device of said printer device; and
   applying at said printer device a plurality of repeat printings of said raster image processed minimum pattern (1102, 1203) at spatial intervals determined by said step factor.

2. The method as claimed in claim 1, comprising the step of:

   parsing (1100) said image data; and
   storing (1101) a minimum pattern image data describing said minimum pattern, locally at said printer device.

**3.** The method as claimed in claim 1 or 2:

replicating said minimum pattern a plurality of times;
arranging said plurality of minimum pattern replications in a tiled manner (200-204), wherein said plurality of tiled minimum pattern replications are separated from each other by a two dimensional step factor; and
printing an image comprising said stepped and repeated minimum patterns.

**4.** A method of operating a printer device for printing an image comprising a plurality of minimum repeated patterns, said method comprising a method of processing image data according to claim 1.

**5.** The method as claimed in claim 4, wherein the minimum pattern data comprises one or a plurality of identical designs.

**6.** The method as claimed in any one of claims 4 to 5, wherein the step of receiving the raster image processed minimum pattern comprises:

parsing (1100) the received raster image processed minimum pattern; and
storing (1101) the received raster image processed minimum pattern in a data storage device.

**7.** A printer system comprising:

a first computer entity (402), said first computer entity comprising a first data processor, a first memory means, a first communications means, an application capable of receiving an image data file (600) and of determining (801) from said image data file a minimum pattern image data which cannot be constructed by replication of a smaller self contained repeatable unit;
a raster image processor (501, 601), said raster image processor capable of receiving said minimum pattern image data and generating a raster image processed minimum pattern and a step and repeat function ; and
at least one printer device, said printer device comprising an input/ output device and a printer mechanism for printing said raster image processed minimum pattern, said printer mechanism comprising a print application, said print application comprising a step and repeat component (1102), operating to apply a step and repeat function to said rasterized pattern image data, for printing said pattern image data across a print medium to produce a printed image comprising a plurality of said minimum patterns repeated at spatial intervals specified by said step and repeat function.

**Patentansprüche**

**1.** Ein Verfahren zum Verarbeiten von Bilddaten in einem Druckersystem, wobei das Druckersystem einen Rasterbildprozessor und eine Druckervorrichtung umfasst, wobei die Druckervorrichtung eine Eingabe-/Ausgabevorrichtung umfasst, wobei das Verfahren folgende Schritte umfasst:

Empfangen einer Bilddatendatei (600);
Bestimmen (801), aus der Bilddatendatei, eines Minimalmusters, das nicht durch eine Replikation einer kleineren, in sich geschlossenen, wiederholbaren Einheit aufgebaut werden kann;
Bestimmen (802), aus der Bilddatei, eines Stufenfaktors, wobei der Stufenfaktor eine Translationsverschiebung des Minimalmusters darstellt, um Wiederholungen des Musters über ein Druckmedium hinweg zu erzeugen, wobei der Stufenfaktor als zweidimensionale Verschiebung bestimmt wird, die zumindest eine erste und eine zweite kartesische Koordinate umfasst;
Rasterbildverarbeiten des Minimalmusters (601), um ein rasterbildverarbeitetes Minimalmuster zu erzeugen;
Senden (803) des rasterbildverarbeiteten Minimalmusters von dem Rasterbildprozessor an eine Druckervorrichtung (602);
Senden des Stufenfaktors von dem Rasterbildprozessor an die Druckervorrichtung;
Empfangen des Stufenfaktors und des rasterbildverarbeiteten Minimalmusters an der Eingabe-/Ausgabevorrichtung der Druckervorrichtung; und
Anwenden, an der Druckervorrichtung, einer Mehrzahl von Wiederholungsdrucken des rasterbildverarbeiteten Minimalmusters (1102, 1203) in räumlichen Intervallen, die durch den Stufenfaktor bestimmt werden.

**2.** Das Verfahren gemäß Anspruch 1, das folgenden Schritt umfasst:

Parsen (1100) der Bilddaten; und
lokales Speichern (1101) von Minimalmusterbilddaten, die das Minimalmuster beschreiben, an der Druckervorrichtung.

**3.** Das Verfahren gemäß Anspruch 1 oder 2:

mehrmaliges Replizieren des Minimalmusters;
Anordnen der Mehrzahl von Minimalmusterreplikationen auf eine fliesenartige Weise (200 - 204), wobei die Mehrzahl von fliesenartigen Minimalmusterreplikationen durch einen zweidimensionalen Stufenfaktor voneinander getrennt sind; und

Drucken eines Bildes, das die dem Step-und-Repeat-Verfahren unterzogenen Minimalmuster umfasst.

4. Ein Verfahren zum Betreiben einer Druckervorrichtung zum Drucken eines Bildes, das eine Mehrzahl von wiederholten Minimalmustern umfasst, wobei das Verfahren ein Verfahren zum Verarbeiten von Bilddaten gemäß Anspruch 1 umfasst.

5. Das Verfahren gemäß Anspruch 4, bei dem die Minimalmusterdaten einen oder eine Mehrzahl identischer Entwürfe umfassen.

6. Das Verfahren gemäß einem der Ansprüche 4 bis 5, bei dem der Schritt des Empfangens des rasterbildverarbeiteten Minimalmusters folgende Schritte umfasst:

Parsen (1100) des empfangenen rasterbildverarbeiteten Minimalmusters; und
Speichern (1101) des empfangenen rasterbildverarbeiteten Minimalmusters in einer Datenspeicherungsvorrichtung.

7. Ein Druckersystem, das folgende Merkmale aufweist:

eine erste Computerentität (402), wobei die erste Computerentität einen ersten Datenprozessor, eine erste Speichereinrichtung, eine erste Kommunikationseinrichtung, eine Anwendung, die in der Lage ist, eine Bilddatendatei (600) zu empfangen und ausgehend von der Bilddatendatei Minimalmusterbilddaten zu bestimmen, die nicht durch eine Replikation einer kleineren, in sich geschlossenen, wiederholbaren Einheit aufgebaut werden können, umfasst;
einen Rasterbildprozessor (501, 601), wobei der Rasterbildprozessor in der Lage ist, die Minimalmusterbilddaten zu empfangen und ein rasterbildverarbeitetes Minimalmuster und eine Step- und Repeat-Funktion zu erzeugen; und
zumindest eine Druckervorrichtung, wobei die Druckervorrichtung eine Eingabe-/Ausgabevorrichtung und einen Druckermechanismus zum Drucken des rasterbildverarbeiteten Minimalmusters umfasst, wobei der Druckermechanismus eine Druckanwendung umfasst, wobei die Druckanwendung eine Step- und Repeat-Komponente (1102) umfasst, die dahin gehend arbeitet, eine Step- und Repeat-Funktion auf die Rasterisiertes-Muster-Bilddaten anzuwenden, zum Drucken der Musterbilddaten über ein Druckmedium hinweg, um ein gedrucktes Bild zu erzeugen, das eine Mehrzahl der Minimalmuster umfasst, die in räumlichen Intervallen, die durch die Step- und Repeat-Funktion spezifiziert werden, wiederholt werden.

## Revendications

1. Procédé de traitement de données d'image dans un système d'imprimante, ledit système d'imprimante comprenant un processeur d'images vectorielles pour conversion en mode point et un dispositif d'imprimante, ledit dispositif d'imprimante comprenant un dispositif d'entrée/sortie, ledit procédé comprenant les étapes consistant à :

recevoir (900) un fichier de données d'image ;
déterminer (901) à partir dudit fichier de données d'image un motif minimal qui ne peut pas être construit par réplication d'une unité répétable indépendante plus petite ;
déterminer (902) à partir dudit fichier d'image un facteur de pas, ledit facteur de pas représentant un décalage en translation dudit motif minimal, afin de produire des répétitions du motif transversalement à un support d'impression, ledit facteur de pas étant déterminé sous la forme d'un décalage bidimensionnel comprenant au moins une première et une deuxième coordonnées cartésiennes ;
traiter par le processeur d'images vectorielles (501, 610) ledit motif minimal pour produire un motif minimal converti d'image vectorielle en mode point, dit simplement converti en mode point ci-après ;
envoyer dudit processeur d'images vectorielles ledit motif minimal converti en mode point vers un dispositif d'imprimante (602) ;
envoyer dudit processeur d'images vectorielles ledit facteur de pas audit dispositif d'imprimante, recevoir audit dispositif d'entrée/sortie dudit dispositif d'imprimante ledit facteur de pas et ledit motif minimal converti en mode point ; et
appliquer (1202, 1203) audit dispositif d'imprimante une pluralité d'impressions répétées dudit motif minimal converti en mode point, à des intervalles spatiaux déterminés par ledit facteur de pas.

2. Procédé selon la revendication 1, comprenant l'étape consistant à :

découper (1200) lesdites données d'image ; et
stocker (1201) localement, audit dispositif d'imprimante, des données d'images du motif minimal décrivant ledit motif minimal.

**3.** Procédé selon la revendication 1 ou 2, comprenant l'étape consistant à:

répliquer une pluralité de fois ledit motif minimal;

disposer de manière dallée (200 à 204) ladite pluralité de réplications du motif minimal, les réplications dallées du motif minimal de ladite pluralité de réplications étant séparées les unes des autres par un facteur de pas bidimensionnel; et

imprimer une image comprenant lesdits motifs minimaux répétés pas à pas.

**4.** Procédé d'exploitation d'un dispositif d'imprimante pour imprimer une image comprenant une pluralité de motifs minimaux répétés, ledit procédé comprenant un procédé de traitement des données d'image conforme à la revendication 1.

**5.** Procédé selon la revendication 4, dans lequel les données de motif minimal comprennent une structure ou une pluralité de structures identiques.

**6.** Procédé selon l'une quelconque des revendications 4 ou 5, dans lequel l'étape de réception du motif minimal converti en mode point comprend les étapes consistant à:

découper (1200) le motif minimal reçu converti en mode point; et

stocker (1201) dans un dispositif de stockage de données le motif minimal reçu converti en mode point.

**7.** Système d'imprimante comprenant:

une première entité informatique (402), ladite première entité informatique comprenant un premier processeur de données, un premier moyen de mémoire, un premier moyen de communications, une application apte à recevoir (900) un fichier de données d'image et à déterminer (901), à partir dudit fichier de données d'image, des données d'image d'un motif minimal qui ne peut pas être construit par réplication d'une unité répétable indépendante plus petite; un processeur (501, 610) d'images vectorielles, ledit processeur d'images vectorielles pouvant recevoir lesdites données d'image du motif minimal, et générer un motif minimal converti en mode point et une fonction de répétition pas à pas; et

au moins un dispositif d'imprimante, ledit dispositif d'imprimante comprenant un dispositif d'entrée/sortie et un mécanisme d'imprimante pour imprimer ledit motif minimal converti en mode point, ledit mécanisme d'imprimante comprenant une application d'impression, ladite application d'impression comprenant un composant de répétition pas à pas (1102), opérant pour appliquer une fonction de répétition pas à pas auxdites données d'image du motif converti en mode point, pour imprimer lesdites données d'images de motif transversalement à un support d'impression afin de produire une image imprimée comprenant une pluralité desdits motifs minimaux répétés à des intervalles spatiaux spécifiés par ladite fonction de répétition pas à pas.

Fig. 2

CAD Application ⌐ 300

Raster image processor ⌐ 301

Printer ⌐ 302

Fig. 3
(Prior Art)

Fig. 4

EP 1 288 850 B1

EP 1 288 850 B1

| | |
|---|---|
| Print application | 508 |
| Interface | 507 |
| OS | 506 |
| Data storage | 505 |
| Memory | 504 |
| Processor | 503 |
| Comms ports | 502 |
| Raster image processor | 501 |
| Print mechanism | 500 |

400

| | |
|---|---|
| CAD application | 515 |
| Interface | 514 |
| OS | 513 |
| Data storage | 512 |
| Memory | 511 |
| Processor | 510 |
| Comms ports | 509 |

402

Fig. 5

Print drive — 608

Interface — 607

OS — 606

Data storage — 605

Memory — 604

Processor — 603

Comms ports IP/OP — 602

Print mechanism — 601

— 600

CAD application — 620

Interface — 619

OS — 618

Data storage — 617

Memory — 616

Processor — 615

Comms ports — 614

— 613

IP/OP — 611

Raster image processor — 610

IP/OP — 612

Fig. 6

```
┌─────────────────────────────┐
│                             │
│      CAD application        │ ⌐ 700
│                             │
└─────────────────────────────┘
              │
              ▼
┌─────────────────────────────┐
│                             │
│           RIP               │ ⌐ 701
│                             │
└─────────────────────────────┘
              │
              ▼
┌─────────────────────────────┐
│                             │
│         Printer             │ ⌐ 702
│                             │
└─────────────────────────────┘
```

Fig. 7

Fig. 8

Receive image data from
CAD application ⟍ 900

↓

Determine minimum repeat
pattern of image data ⟍ 901

↓

Determine step factor ⟍ 902

↓

Send minimum repeat pattern
with step factor ⟍ 903

# Fig. 9

# Fig. 10

R = 180°

Y

X

# Fig. 11

Parser ~1200

Pattern Image ~1201

Step and Repeat ~1202

Writing System ~1203

Fig. 12

Receive image data from
CAD application                1300

Determine repeat pattern
from image data                1301

Determine step factor          1302

Send repeat pattern and
step factor                    1303

Fig. 13

Fig. 14

Fig. 15